# EUROPEAN PATENT SPECIFICATION

(11) **EP 3 683 135 B1**
(45) Date of publication and mention of the grant of the patent: **11.08.2021**
(21) Application number: 19209068.6
(22) Date of filing: 14.11.2019
(51) Int. Cl.: B63H 3/00, B63H 3/02

(54) **PROPELLER FOR SAILING BOATS WITH VARIABLE PITCH WITH AUTOMATIC RETURN TO FEATHERED POSITION WITHOUT GEARS**
PROPELLER FÜR SEGELBOOTE MIT VARIABLER STEIGUNG MIT AUTOMATISCHER RÜCKSTELLUNG IN SEGELSTELLUNG OHNE GETRIEBE
HÉLICE POUR BATEAUX À VOILE À PAS VARIABLE AVEC RETOUR AUTOMATIQUE À LA POSITION EN DRAPEAU SANS ENGRENAGES

(30) Priority: 20.11.2018 IT 201800010465
(43) Date of publication of application: 22.07.2020
(73) Proprietor: Scacchi, William Edoardo, 13844 Piatto (Biella) (IT)
(72) Inventor: Scacchi, William Edoardo, 13844 Piatto (Biella) (IT)
(74) Representative: Petruzziello, Aldo

(56) References cited:
- EP-A1- 2 857 307
- US-A- 1 626 056
- US-A- 2 283 774
- US-A- 3 295 610
- US-A- 3 308 889

## Description

The present invention relates to a new type of marine propeller with variable pitch, particularly useful for auxiliary motors of sailing boats (generally used only in exceptional cases of emergency, for docking manoeuvres or in the absence of wind), which also offers a lower hydrodynamic resistance to the progress of the vessel during sailing.

To date, there are three types of marine propellers used in sailing boats:
- fixed
- folding
- feathering
Propellers with pitch adjustment mechanism are known for example from US 1 626 056, US 2 283 774, US 3 295 610, EP 2 857 307 and US 3 308 889. Fixed propellers are generally those installed as standard on many sailing boats and, with the motor switched off, they develop a high aerodynamic resistance because they generate intense vortices and turbulence when the flow of water hits them. This is because the orientation of the blades is fixed in such a way as to be efficient during motor travel, thus offering the water resistance most of the surface of the blades even when the motor is switched off.

Folding propellers offer the least resistance to the flow during sailing, since the blades, hinged to the base of the leaf in a rotatable manner, fold back on themselves towards the stern of the vessel. However, this category of propellers has some disadvantages.

The first of these is a more difficult response to commands because the principle of operation uses the centrifugal force of rotation to reopen the blades and generate hydrodynamic thrust. Secondly, they have larger overall dimensions towards the stern which results in a considerable imbalance of the masses on the drive shaft due to the intrinsic geometry of this mechanism.

Another disadvantage of this type of folding propellers lies in the fact that, in order to modify the pitch (i.e. the angle of incidence of the blade defined as the geometric angle between the profile of the blade and the reference geometric axis (transverse) of the propeller, otherwise known as angle of incidence), it is necessary to change the entire set of blades in that each of said sets is manufactured for one single specific working pitch.

Feathering propellers have a configuration in which the blades are able to rotate around their own axis which is perpendicular to the axis of rotation of the drive shaft and a mechanism inside the central body governs the orientation of the same (orientable blades).

When the boat sails, and the motor is switched off, the blades that generally do not have a particularly "spoon" shape are in the feathered position, that are oriented so that the flow of water hits the profile (thin) of the blades, i.e. that hits substantially only their thickness rather than the surface thereof so as to have the minimum hydrodynamic resistance to advancement (resting position of the blades), corresponding to an angle of incidence equal to 90°.

However, the feathering propellers currently on the market need complete disassembly in order to carry out any work of modification or replacement of the blades as they are fixed inside the central body.

Moreover, in this type of propellers there is a gear system, e.g. conical wheels, for the transmission and transformation of the rotation movement of the hub into rotation of the blades from the rest position to the running position, wherein said system has the disadvantage of generating internal radial forces which impact on the central body, as well as having considerable internal overall dimensions in the longitudinal direction, with consequent higher cantilever loads on the drive shaft.

The object of the present invention is to overcome, at least in part, the disadvantages of the known technique by providing variable pitch propellers for auxiliary motors that offer a reduced hydrodynamic resistance and whose working pitch can be modified without changing the entire set of blades.

Another object is to provide a marine propeller as defined above that also has a central body of smaller longitudinal overall dimensions so as to lighten the drive shaft from overhanging loads.

These and other objects, made clearer here below, are achieved by the marine propeller in accordance with the invention having the features listed in the appended independent claim.

Advantageous embodiments of the invention are disclosed by the dependent claims. One object of the present invention relates to a propeller that comprises a device for the transmission and transformation, in an automatic manner, of the rotary motion of the drive shaft into inclination motion of the propeller blades and for the stop of the blades at the desired inclination, where said device is characterised in that it provides a mechanism of the Scotch yoke type.

In this way it is possible to obtain the return to the feathering position (blades oriented so that the flow of water hits substantially only their thickness), but also the passage from the feathering position to the working position, automatically.

Further features of the invention will be made clearer by the detailed description that follows, referred to an embodiment purely by way of a non-limiting example, illustrated in the accompanying drawings, in which:
Figures 1a and 1b are perspective views of the propeller in accordance with the present invention, respectively from the stern and from the bow, with the blades in feathering position for sailing;
Figure 2 is an exploded perspective view of the propeller of Fig. 1a;
Figure 3a is an exploded perspective view of the motion transmission assembly that transforms the motion of the drive shaft into the motion of inclination of the propeller blades in accordance with the present invention;
Figure 3b is a perspective view of the slide illustrated in Fig. 3a;
Figure 4 is a view in vertical section of the propeller of Fig. 1a in accordance with the present invention where the vertical blade has been shown interrupted and the relative coupling of collar/shank has been illustrated in a simplified manner;
Figure 5 is a vertical section view of the propeller body taken along line V-V of Figure 4;
Figure 6 is a vertical section view of the propeller body taken along line VI-VI of Figure 4;
Figure 7 illustrates respectively (a) in perspective view and (b) in plan view the motion transmission assembly when the blades are in feathered position;
Figure 8 shows respectively (a) in perspective view and (b) in plan view the motion transmission assembly when the blades are in working position during the running of the propeller;
Figure 9 shows, in plan view, three different types (a), (b), and (c) of hinging of a blade crank on the slot of the sleeve (slide).
With the aid of the drawings, the propeller according to the invention will now be described.

The propeller that forms the object of the present invention, denoted overall by reference number 100, comprises an external central body and a plurality of blades 5, generally at least two blades, projecting from said central body.

In the embodiment illustrated in the drawings, the propeller 100 of the present invention has three blades 5, even if the number of blades is not binding for the purposes of the present invention.

Said external central body, generally with a ogival shape, is composed of two halves, 10 and 11, joined by means of axial screws 12: a first semi-ogive 10 at the bow and, at the stern, a second semi-ogive 11 which carries, at the end thereof, a cap 14 with the function of sacrificial anode, as will be described in detail here below.

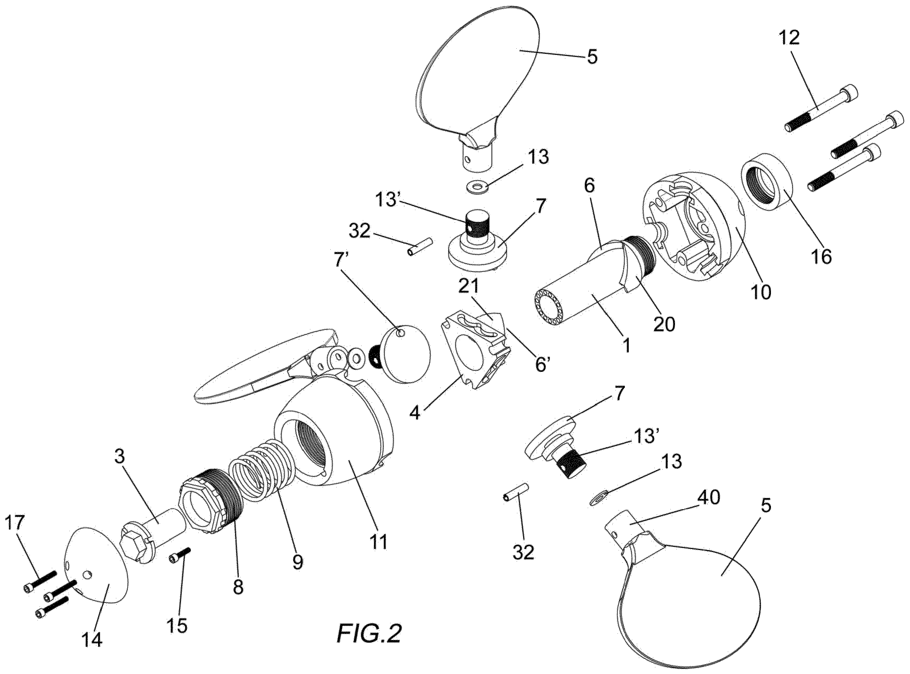

As illustrated in Fig. 2, inside said ogival body 10-11 a hub 1 is housed having a threaded end section, on which a first threaded ring nut 16 is screwed in order to restrain and fix said hub 1 integrally to said bow semi-ogive 10, preventing any movement of translation of the hub 1 with respect to the ogival body 10-11.

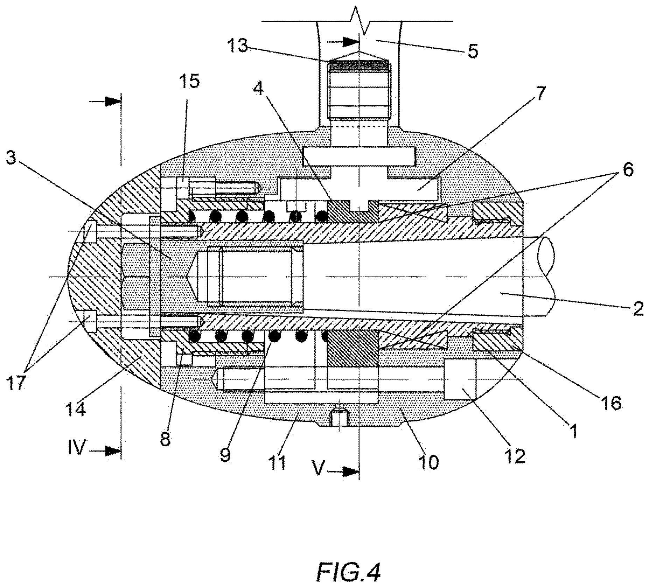

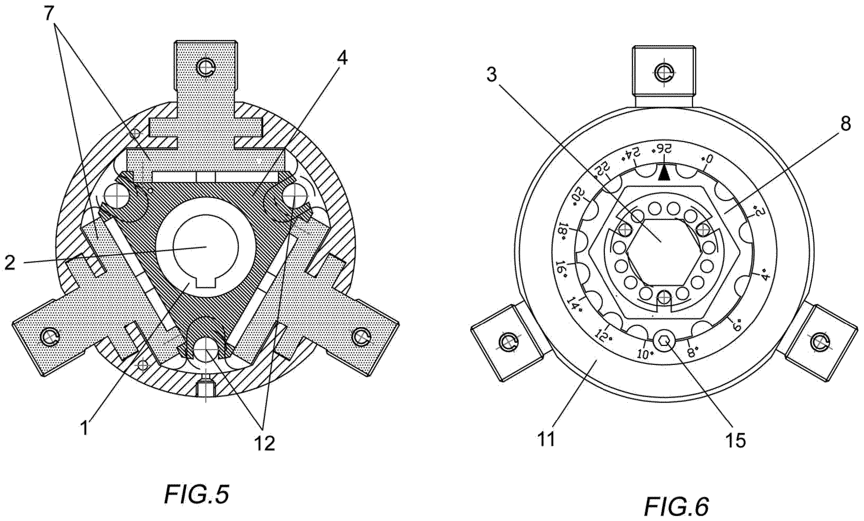

Said hub 1 houses in its interior a drive shaft 2 (Fig. 4) which is restrained to said hub 1 by means of a conventional and already known keyed conical coupling (Fig. 5). Said hub-drive shaft coupling A is secured in position by means of threaded nut 3 and by means of one or more screws 17 that lock said threaded nut 3 to the hub 1 (Fig. 4).

Hub 1 has on its external surface one or more cuspid protrusions or reliefs 20, placed after said threaded section and adjacent to it. Said protrusions 20 are integral to hub 1 and develop parallel to the longitudinal axis of hub 1 for a certain section of its length.

The reliefs or protrusions 20 are advantageously at least two in number, placed diametrically opposed to each other.

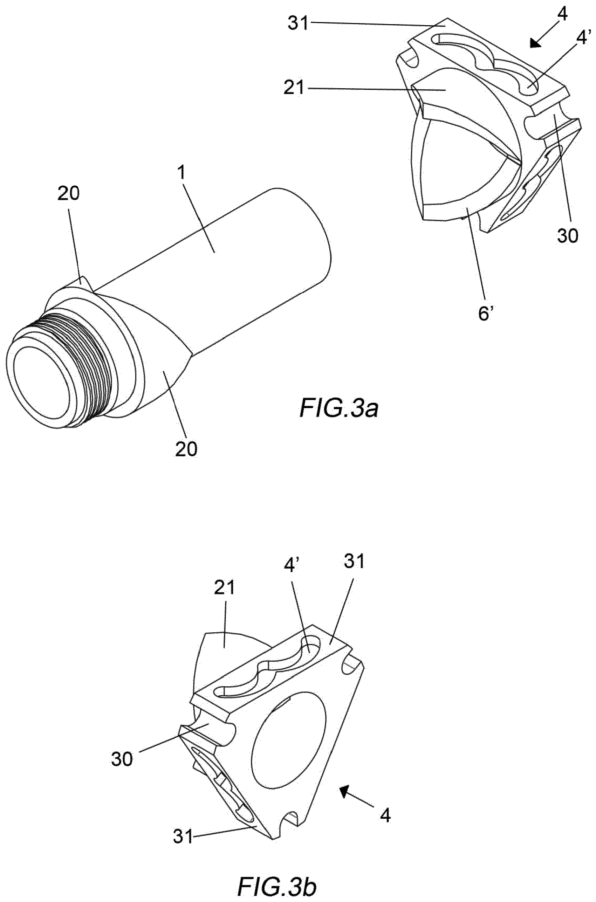

As illustrated in Figs. 3a, 3b, each of said reliefs 20 also has two inclined edges 6 so as to define, for each protrusion 20, a substantially cuspid or triangular profile.

Around the hub 1 is also mounted coaxially a sleeve element 4, here below indicated also as "slide", which can only slide longitudinally along the hub 1.

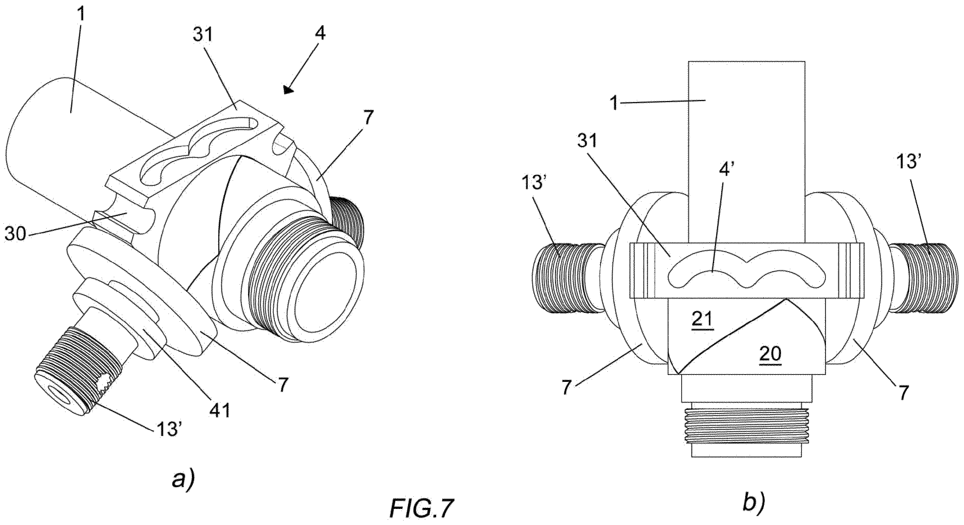

Said sleeve 4 has a first section formed by three transverse planes or surfaces 31 (Figs. 7-8) placed transversely with respect to the longitudinal axis of hub 1. Said planes 31 are placed one in relation to the other so as to form, in a vertical section in the transverse direction, a triangle (Fig. 4).

Each of said transverse planes 31 has a groove 4' (Figs. 7-8), generally in the form of two semi-arcs contiguous and continuous one in relation to the other. Each groove 4' constitutes a guide to the movement of a respective pin 7' (Fig. 2) integral with the respective blade 5 of the propeller 100. In fact, said pin 7' meshes with said groove 4' as will be explained later in detail.

The second section of this sleeve 4, also defined as the remaining section, is formed by one or more protrusions 21 placed parallel to the longitudinal axis of hub 1, and are in number, shape and size equal to those of the cuspid protrusions 20 of hub 1.

Also in this case, each of said reliefs 21 has two inclined edges 6' so as to define a substantially cusped or triangular profile.

Slide 4 also has three longitudinal seats 30 (Figs. 7-8), distant one from the other, each one suitable for housing the respective axial screw 12 (Fig. 5). Said screws 12 prevent the slide 4 from performing any rotary movement.

Each seat 30 is placed at the convergence of each pair of transverse surfaces 31. In practice, when hub 1 is stationary, the cuspid protrusions 21 of slide 4 are in complete abutment against the cuspid protrusions 20 of hub 1, and slide 4 is in rest position. In this position the inclined sides/edges 6 and 6' of said protrusions 20 and 21 are completely in contact one with the other (Fig. 7).

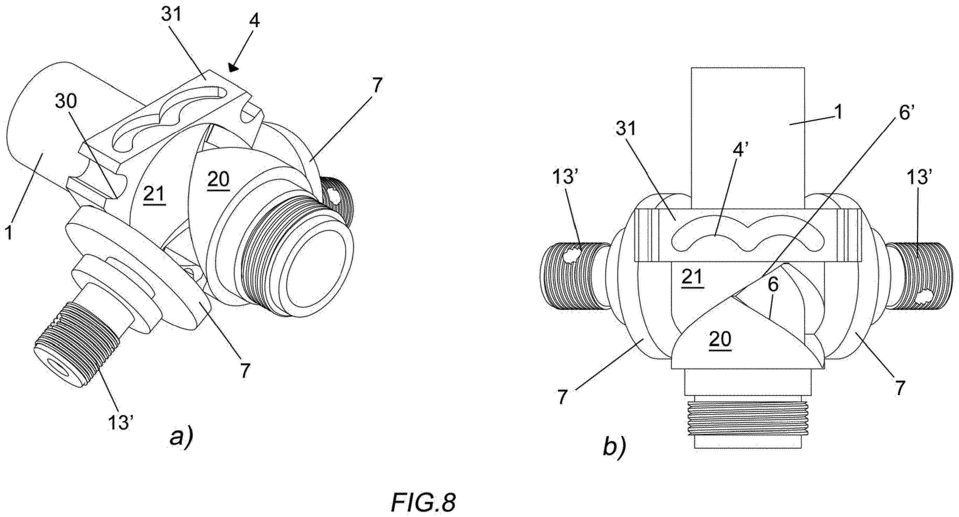

When the hub 1 is rotated (through rotation of the drive shaft 2), the sleeve 4 slides on the hub 1 from a first rest position to a second working position in which the abovementioned inclined sides 6, 6' are partially in contact one with the other (Fig. 8).

In practice, the rotation movement of hub 1 causes the inclined edges 6 of the respective protrusions 20 provided in hub 1 to slide along the inclined edges 6' of the protrusions 21 of slide 4, which moves with respect to its initial position, giving rise to a longitudinal sliding along hub 1 in the stern direction.

The final position of said slide 4, and therefore the stroke of slide 4, is determined and regulated by a second threaded stop ring nut 8 (Figs. 2 and 4), generally with several principles, located at the stern end of hub 1. This ring nut 8, advantageously with hexagonal head, can be screwed inside the stern semi-ogive 11 and is locked in the desired position (which represents the stopping point of the stroke of slide 4) by means of a safety screw 15 housed in a respective seat formed in the stern semi-ogive 11.

Thanks to the thread, this ring nut 8, and together with it the stop point of the stroke of slide 4, can be adjusted precisely which translates into a precise adjustment of the working pitch defined in degrees. These degrees are shown on a graduated crown placed around the ring nut 8, on the front stern face of the propeller 100.

In fact, as illustrated in Fig. 6, an arrow is placed on said second stop ring nut 8 to indicate the final angle of blades 5 in the running position. The smaller the set angle (indicated by the arrow), the wider the angular movement of blades 5 in the passage from the feathering position to the working position, both in forward and in reverse.

It should then be observed that the greater the angle of incidence of the blades, the greater the flow of water pushed by the blades 5 of the propeller 100 will be.

It should be noted that when slide 4 is in the maximum limit position towards the stern (setting 0° on the ring nut 8), the angle of incidence of the blades is null, which means that the hydrodynamic thrust of the propeller is also null at this extreme.

In practice, with an angle of 20° set on the ring nut, the final pitch will be 20°, therefore the blades will rotate (clockwise or counter-clockwise depending on the rotation direction set for propeller 100) through 70° (90°-20°), given that the starting angle of the feathering position is 90° by convention.

Therefore, the angle marked on the ring nut is the final pitch angle of the propeller.

As mentioned above, on each of the transverse planes 31 of slide 4 a respective slot 4' is formed, intended to be engaged with a respective pin 7' of a crank element 7 integral with the respective blade 5.

In practice, each pin 7' of crank 7 which is integral with the respective blade 5 (Figs. 4 and 7) can move in the corresponding slot 4' of slide 4.

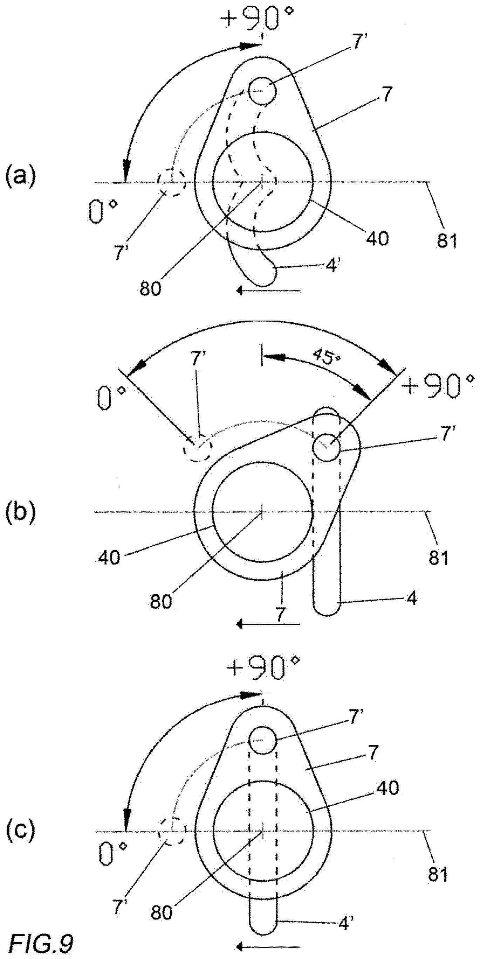

Going into detail in the description of the cranks 7, each of them is formed by a base with circular shape in plan view, or of another curved shape in plan view for example drop-like (Fig. 9), from the bottom of which the pin 7' projects, while from the top a threaded shank 13' projects and it is intended to screw into a threaded seat inside the respective collar 40 (Fig. 4) of the corresponding blade 5. The tightening between shank 13' and blade 5, and the safety of this tightening, is guaranteed by a relative rubber ring 13 in neoprene installed in collar 40 of blade 5 and by an elastic peg (or spring pin) 32 (Fig. 2).

Blades 5 are thus made to be integral with the cranks 7.

It is understood that it is also possible to provide a hinging of the blades with male threading on the latter and female threading on the cranks inside the propeller, without thereby departing from the scope of the present invention.

The pin 7' is placed at a certain distance (radius) from the centre of the circular base (point in which the axis of the shank 13' passes) which determines the maximum stroke of the slide 4.

Between the shank 13' and the circular base of the crank 7 an annular protrusion 41 is provided that acts as a thrust spacer so as to eliminate the need for internal spacers, said annular protrusion 41 being practically placed around said shank 13'.
Said annular protrusion 41 placed around said shank 13' is provided also in the case wherein the base of the crank has a non-circular shape in plan view, for example with a drop profile.

Also in the case of crank 7 with drop profile section (Fig. 9) or other type of profile, the pin 7' (illustrated in Figure 9 with continuous line instead of dotted for clarity of illustration) is placed at a certain distance from axis 80 of shank 13', said axis 80 coinciding with the axis of collar 40 and with the rotational axis of blade 5.

It should be noted that the starting point of the pin 7' of crank 7 (corresponding to the feathered position of the respective the blades) can be in any position inside the slot 4', even if it is preferable that it be placed as in Figure 9b, said sleeve not being illustrated in Fig. 9 for simplicity of illustration.

Moreover, each assembly of "blade 5-crank 7" can be hinged on the sleeve 4 in various ways, without thereby departing from the scope of the present invention.

For example, this assembly of "blade 5-crank 7" can be assembled in such a way that the vertical axis 80 of the collar 40 and therefore the rotation axis of the blade 5 (i.e. the axis which crosses the sheet of Figure 9 (a), (b), (c)) lies in the same vertical plane passing through the pin 7' as illustrated in Figs. 9 (a) and (c). In this way the arm of the crank 7 (which is represented by the segment that joins the pin 7 and the rotation point 80) is perpendicular to the longitudinal axis of the shaft/hub of the propeller, represented in Figure 9 with reference numeral 81.

Or else this assembly of "blade 5-crank 7" can be mounted in such a way that axis 80 of collar 40 lies in another vertical plane parallel to the vertical plane passing through pin 7' as illustrated in Fig. 9 (b). In this case the segment that joins pin 7 and point 80 (that represents the arm of crank 7) is tilted through 45° with respect to longitudinal axis 81 of the shaft/hub of the propeller.

The cranks 7 of the blades 5 are enclosed between the two semi-ogives 10 and 11 in which appropriate semi-recesses are formed which, once the two semi-ogives 10 and 11 have been joined, constitute the seats for said cranks 7. In this way the blades 5 are made integral to the central ogive body of the propeller 100 but able to rotate around their own axis.

Therefore the blades 5 of the propeller 100 of the present invention are not hinged to the body of the propeller as instead is the case in the feathering propellers of the prior art, and thanks to this it is possible to make modifications to the blades without disassembly of the central body.

In practice, the blades 5 can rotate around their own axis following the movement of the respective pins 7' in the corresponding slots 4' (from a first position to a second position indicated as a dotted line in Figs. 9a, b, c) caused by the translatory movement of the slide 4 (movement whose direction is indicated by the arrow in Figs. 9a, b, c), which is determined in turn by the rotation of hub 1. Therefore, the linear motion (longitudinal translation) of slide 4 is transformed into simultaneous rotation of the aforementioned cranks 7 and consequently of the blades themselves 5 around their own axis, thus allowing a change from the feathering position to that of the propeller running (working position).

In particular, the rotating cranks 7 are coupled to slide 4 in such a way as to give rise to a mechanism of the "Scotch yoke" type, in which an axial motion (that of slide 4) is transformed into a rotary motion (that of the pins 7', of the cranks 7 and of the relative blades 5 integral with them). More specifically, it can be said that the present mechanism is modified Scotch yoke since the traditional Scotch yoke mechanism provides a straight slot, rather than curved, slot.

As already mentioned, even if the profile of the slot 4' has been illustrated substantially in the form of two semicircles or arches which are contiguous and continuous one in relation to the other, it is understood that this profile can be curved, arched circle with various radii of curvature, or another shape, such as for example straight line (straight slot), appropriately designed to cause a certain rotation of the pins 7' to pass the blades 5 from the feathered position to the working position.

It should be noted that the present modified Scotch yoke mechanism is completely different from the type of mechanism used in common propellers with variable pitch in which, generally, the propeller hub is provided with a toothed crown integral with a central truncated cone pinion that permanently meshes the pinions of the respective blades, so that the rotation of the central pinion with respect to the cylindrical body of the propeller determines the corresponding rotation of the blades, around the respective axes of hinging to the propeller body.

It should also be pointed out that in the present description the term "variable pitch propeller" is to be understood as "propeller with self-adjustable pitch", that is a propeller capable of passing from the feathering pitch (which represents a first position of the blades) to the working pitch (or final pre-set pitch, and which represents the second position or final position of the blades) in an automatic manner, as soon as the motor of the boat is activated, as will be explained in detail here below.

The position of the stop ring nut 8 is kept locked by the safety screw 15 housed in a respective seat formed in the aft semi-ogive 11 (Fig. 4).

Between slide 4 and stop ring nut 8, a compression elastic element 9 is interposed, partially housed inside said ring nut 8: said spring 9, whose elongation is parallel to the longitudinal axis of the hub 1, intervenes to ensure the return of slide 4 into the feathering position of the propeller (automatic feathering effect) when the motor is switched off, but at the same time intervenes to protect the mechanism from sudden jerks due to sudden changes of manoeuvre (anti-shock effect).

As elastic compression element 9 mention can be made, advantageously, of a helical contrast spring or preloaded spring, even if it is understood that other similar elements can be used without thereby departing from the scope of the present invention.

The profile of the blades 5 of the propeller 100 of the present invention is advantageously a symmetrical profile, although this is not binding for the purposes of the present invention.

To protect the entire propeller from galvanic corrosion in a marine environment, a sacrificial zinc anode 14 is provided, mounted at the aft end of the assembly and secured by one or more zinc-locking and nut-locking screws 17, preferably three in number.

A description will now be given of the functioning of the propeller 100, the subject of the present invention.

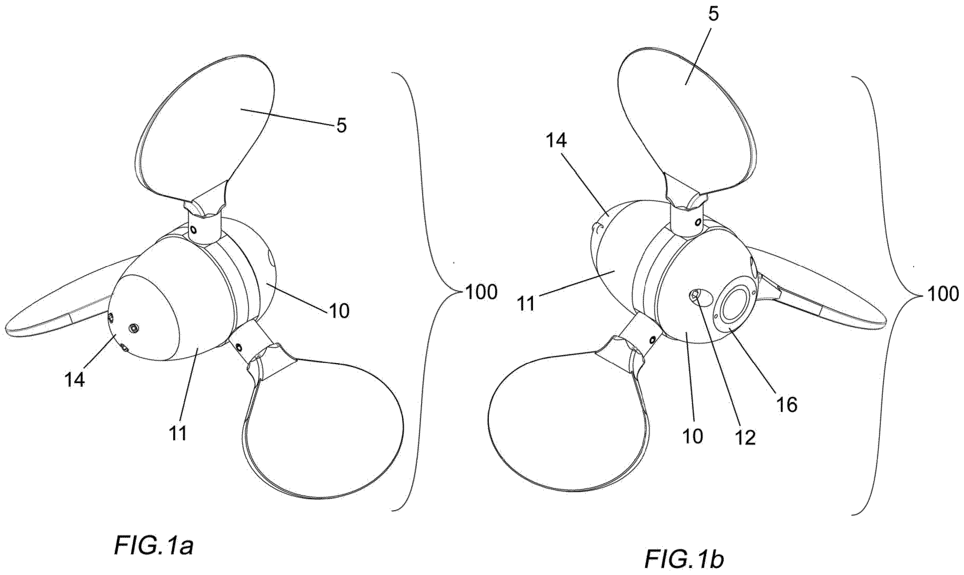

When the motor is switched off, the blades 5 of the propeller 100 are in the feathered position, otherwise known as rest position, that is of minimum hydrodynamic resistance to advance (and therefore with the blades 5 arranged as in Figs. 1a and 1b, where the flow of water substantially hits only their thickness but not the surface). There is no danger of the blades 5 accidentally assuming another position thanks to the fact that the hub 1 is stationary and that only the rotary movement of the hub 1 can set in motion said slide 4.

In fact, the rest position is guaranteed by the preloading of spring 9 and by the shape of the coupling mechanism with double cuspid between hub 1 and slide 4 (self-stable). Starting up the motor, the drive shaft 2 will set in rotation the hub 1 which in the first moments will undergo a relative rotation with respect to the rest of the propeller 100, since the blades 5 in feathering position offer the maximum resistance to the rotation, generating on the external body a torque resistant to the motion.

Said relative rotation of hub 1 determines a helical sliding between slide 4 and hub 1, which causes slide 4 to move away from hub 1 until contact of said slide 4 with the stop ring nut 8, said slide 4, at the same time, going to compress the elastic element 9. This movement of the slide 4 determines the translation movement of the slot 4' that brings the respective pin 7' to move along the profile (curved, rectilinear or of other shape) of the respective slot 4', bringing the blades 5 to rotate with respect to their axis.

The section that said pin 7' can cover in the slot (curvilinear, rectilinear or other shape) 4 depends on the linear section that the slide 4 can cover which is closely linked to the angle which is pre-set on said ring nut 8.

Therefore, the rotation of the blades 5 around their axis ends when said slide 4 abuts against said stop ring nut 8, whose position, as mentioned, is in relation with the angle pre-set on said ring nut 8. From this time onwards there will be rotation of the entire central body of the propeller including the blades 5, oriented so as to turn their surface, or most thereof, to the flow of water in order to generate the propulsive thrust.

As soon as the motor is switched off, the driving torque of drive shaft 2 acting on blades 5 is decreased and elastic element 9 restores the rest position of slide 4 (whose protrusions go to abut against the protrusions of hub 1), consequently restoring the feathering position of blades 5 of propeller 100. Therefore, when the motor is switched off, elastic element 9 operates the return of said sleeve 4 into the position of abutment against said hub 1.

It should be noted that the feathering position is the one corresponding to the 90° angle (see also Fig. 9) and that the various angles of inclination of the blades 5, pre-established on the ring nut 8, correspond to the degrees of final pitch that can be set.

The regulation of the pitch is very simple given that a complete rotation (360°) of the stop ring nut 8 involves the whole range of pitches that can be used for motor navigation, in particular from 0 to 26° with increments of 2° each, as shown in Figure 6.

The procedure for modifying the final pitch is as follows:
- Remove the sacrificial zinc anode 14 by unscrewing its fixing screws 17;
- Unlock the stop ring nut 8 by partially unscrewing the safety screw 15 from its seat;
- Rotate the ring nut 8 by acting on the hexagonal section provided, until the indicator on the ring nut coincides with the desired pitch in degrees, marked on the ogive;
- Screw the safety screw 15 back on to lock the ring nut in the position;
- Reassemble the zinc anode 14 with its fixing screws 17.

It is also possible to provide a mechanism for regulating the pitch by means of a worm screw and toothed ring (different from the previous system with front screw and grooved ring nut) without thereby departing from the scope of the present invention. In the event that it is necessary to change the direction of rotation of the propeller, the following can be considered.

The symmetrical profile of blades 5 makes this operation simple and fast. It is sufficient to unscrew the stop ring nut 8 up to the maximum position towards the stern, so that the slide is able to move freely up to the end of stroke (corresponding to an angle of blades equal to 0°).

Then the synchronised blades are rotated manually.
With this rotation, the pin 7' of crank 7 of each blade 5 is passed on the opposite and specular side of slot 4' of slide 4, which changes the direction of rotation of the mechanism.

To complete the operation, it is sufficient to screw the stop ring nut 8 back to the desired pitch setting and secure it in place with the safety screw.
The advantages of the present invention are considerable thanks to the considerable improvements made with respect to known propellers.

In particular:
- first among all of them is the system of transmission and transformation of the rotational movement of the hub into a linear displacement of the slide by means of the sliding of inclined planes provided between these two parts. This system goes to replace any other gear system often adopted in this type of propeller.
- The radial forces of classic conical toothed wheels are damped in the present invention thanks to the Scotch yoke mechanism that exploits the linear movement of the slide to govern the angling of the blades through the system of synchronised cranks.
- The elastic compression element (helical spring) allows the jerks of the sudden manoeuvres of the motor to be deadened as well as guarantee the automatic return of the propeller to the feathering position (anti-shock effect and automatic return). This aspect has been very much appreciated to date, especially for the newly designed motors equipped with hydraulic motor-propeller transmissions.

- The system of external mounting of the blades, on the central body, used in the present invention and carried out by means of threaded pins and elastic pegs, facilitates the detachment of the blades from the central body and therefore the replacement of the same in case of damage or need to change the diameter of the propeller. This feature is not available on most feathering propellers currently on the market, which require a complete disassembly of the central body in order to perform any work of modification or replacement of the blades.
- The perfect symmetry of the outline of the blades and their particular shape not only ensure better propulsion by reducing the turbulence at the base of the leaves, but also promotes the correct and balanced functioning of the Scotch yoke and for the reversal of the direction of rotation of the propeller. This particular blade design with a symmetrical profile is new. In fact, the present invention exploits an automatic return into feathering position forced by the spring in compression, unlike a return promoted by the axial imbalance of the blade profile currently exploited by other propellers on the market.
- The modification made to the traditional Scotch yoke mechanism with straight slot guarantees better control of the final angle of the blades as it is more precise. In fact, the Applicant has found that with different geometric configurations it is possible to match constant increments in the pitch angle of the propeller to the quite constant increments in the linear position of the slide. All of this leads to considerable improvements in pitch regulation in terms of simplicity and precision. In particular the Applicant has found that the slightly curved slot configuration offers mechanical advantages while maintaining the total stroke of the slide identical to the straight slot configuration. The transmission of rotational force to the cranks is also greatly influenced by the shape of the slide slot and by the length of the crank arm.
- The system of fixing of the sacrificial zinc anode at the head of the propeller, which takes place by means of screws which at the same time lock also the threaded nut, prevent premature detachment due to galvanic corrosion of said anode, a phenomenon that instead occurs frequently in some known propellers. As can be seen from the drawings, said screws are thus placed very close to the axis of rotation of the propeller, ensuring a tightening in a much thicker section of the anode, exploiting it consequently for a longer period of time before galvanic corrosion can cause the detachment thereof. In this way, the number of anodes to be replaced has been reduced over time without having to resort to more complicated systems of protection of the external outline (perimeter) of the zinc (e.g. steel crowns, etc.).
- The regulation of the working pitch is simple and precise thanks to the threaded ring nut 8 with several principles, which is able to satisfy any propulsion setting from 0° to 26°, with a single complete rotation. These steps are clearly visible on the graduated crown around the ring nut, on the aft front face of the propeller, as shown in the drawings. For the adjustment of other propellers available on the market to date, complete or partial disassembly is often necessary with the risk of loss of parts at sea and greater difficulty of the adjustment itself.
- The working position of the propeller according to the present invention is reached in less than a quarter turn of the drive shaft both in forward and in reverse movement thanks to the intrinsic nature of the mechanism. This leads to a considerable improvement in terms of command response and manoeuvrability of the vessel compared to any other propeller with higher response angles available on the market to date.

The present invention is not limited to the particular embodiments previously described and illustrated in the accompanying drawings, but numerous detail changes may be made thereto, within the reach of the person skilled in the art, without thereby departing from the scope of the same invention, as defined in the appended claims.

## Claims

1. Propeller (100) with working pitch that can be regulated automatically (self-adjusting) to change from a first position defined as feathered position to a second position defined as working position,
said propeller (100) comprising a central body (10-11) and a plurality of rotatable blades (5) projecting from said central body (10-11),
said central body (10-11) internally housing a hub (1) of a drive shaft (2) which is arranged coaxial with said hub (1),
said central body (10-11) further internally housing a device for transforming the rotary motion of said hub (1) or of said drive shaft (2) into the rotary motion of said at least one blade (5) around its axis with respect to said central body (10-11) of said propeller (100)
said transformation device being coupled to at least one of said blades (5) and to said hub (1) or to said drive shaft (2),
**characterised in that** said transformation device is a kinematic mechanism of the "Scotch yoke" type and comprises
a sleeve (4) mounted coaxially on said hub (1) in a longitudinally sliding manner, provided with surfaces (31) arranged transversely to the longitudinal axis of the hub (1), on each of said transverse surfaces (31) a respective slot (4') being formed, engaged by a respective pin (7') of a crank element (7) integral with the respective blade (5),
said sleeve (4) being further provided with cuspid-shape protrusions (21) which extend parallel to the longitudinal axis of said hub (1) as cuspid teeth, each of said protrusions (21) having two inclined edges (6'),
said inclined edges (6') of each protrusion (21) of said sleeve (4) being suitable to slide, when said hub (1) rotates, on corresponding inclined edges (6) of a corresponding protrusion (20) provided on said hub (1), in such a way as to generate a linear sliding of said sleeve (4) and a consequent movement of said pins (7') in the corresponding slots (4') so as to cause rotation of said crank elements (7) of said blades (5) and simultaneously rotation of said blades (5) around their axis,
said transformation device also providing a pre-compressed elastic element (9) suitable for ensuring the return of said sliding sleeve (4) into the feathered position.

2. Propeller (100) according to claim 1, wherein each slot (4') of said sleeve (4) has a substantially curvilinear profile, or has a rectilinear profile, preferably rectilinear profile.

3. Propeller (100) according to claim 1 or 2, wherein said protrusions (20; 21) of the respective hub (1) or sleeve (4) are two in number and placed diametrically opposed, said protrusions (21) of said sleeve (4) being of the same shape and size as said protrusions (20) of said hub (1).

4. Propeller (100) according to claim 3, wherein each of said protrusions (20; 21) has a profile with a substantially cuspid or triangular shape.

5. Propeller (100) according to any one of the preceding claims, wherein said sleeve (4) further provides three separate longitudinal seats (30), each suitable for housing a respective screw (12), each seat (30) being placed at the convergence of each pair of transverse surfaces (31).

6. Propeller (100) according to any one of the preceding claims, wherein said hub (1) is fixed to said central body (10-11) by means of, on one side, a first threaded ring nut (16) that can be screwed on a threaded end section of said hub (1) and, on the other opposite side, by means of a threaded nut (3) and screws (17) that lock said threaded nut (3) to the hub (1).

7. Propeller (100) according to any one of the preceding claims, wherein inside said central body (10-11) there is also provided a second threaded stop ring nut (8) located at the aft end of the hub (1) and which can be screwed inside the aft semi-ogive (11) of the central body (10-11), suitable for limiting the stroke of said sleeve (4) depending on the selected working pitch indicated in degrees on a graduated crown arranged around said ring nut (8).

8. Propeller (100) according to claim 7, wherein said elastic compression element (9) is interposed between said sleeve (4) and said second ring nut (8) to operate the return of said sleeve (4) into the position of abutting against said hub (1) when the rotation of said propeller (100) is stopped, so as to rotate said blades (5) from the working position to the feathering position.

9. Propeller (100) according to any one of the preceding claims, wherein said crank member (7) of blade (5) is restrained to said collar (40) of blade (5) by a threaded coupling and elastic peg (32).

10. Propeller (100) according to any one of the preceding claims, wherein each of said blades (5) has a symmetrical profile.

## Patentansprüche

1. Propeller (100) mit betrieblichem Anstellwinkel, der automatisch gesteuert werden kann (selbsteinstellend), um von einer ersten Stellung, die als Segelstellung definiert ist, in eine zweite Stellung, die als Betriebsstellung definiert ist, zu wechseln,
wobei der Propeller (100) einen zentralen Körper (10-11) und mehrere drehbare Blätter (5) umfasst, die von dem zentralen Körper (10-11) vorstehen,
wobei der zentrale Körper (10-11) im Inneren eine Nabe (1) einer Antriebswelle (2), die koaxial zu der Nabe (1) angeordnet ist, aufnimmt,
wobei der zentrale Körper (10-11) im Inneren ferner eine Vorrichtung zur Umwandlung der Drehbewegung der Nabe (1) oder der Antriebswelle (2) in die Drehbewegung des mindestens einen Blatts (5) um dessen Achse in Bezug auf den zentralen Körper (10-11) des Propellers (100) aufnimmt,
wobei die Umwandlungsvorrichtung mit mindestens einem der Blätter (5) und mit der Nabe (1) oder mit der Antriebswelle (2) verbunden ist,
**dadurch gekennzeichnet, dass** die Umwandlungsvorrichtung ein kinematischer Mechanismus vom "Scotch-Yoke"-Typ ist und Folgendes umfasst:
eine Muffe (4), die koaxial in einer in Längsrichtung verschiebbaren Weise an der Nabe (1) befestigt ist, die mit Flächen (31) bereitgestellt ist, die quer zu der Längsachse der Nabe (1) angeordnet sind, wobei auf jeder der querverlaufenden Flächen (31) ein jeweiliger Schlitz (4') gebildet ist, der durch einen jeweiligen Stift (7') eines Kurbelelements (7), das einstückig mit dem jeweiligen Blatt (5) ausgeführt ist, in Eingriff genommen wird,
wobei die Muffe (4) ferner mit Vorsprüngen (21) spitz zulaufender Form bereitgestellt ist, die sich parallel zu der Längsachse der Nabe (1) als spitz zulaufende Zähne erstrecken, wobei jeder der Vorsprünge (21) zwei geneigte Kanten (6') aufweist,
wobei die geneigten Kanten (6') von jedem Vorsprung (21) der Muffe (4) dafür geeignet sind, wenn sich die Nabe (1) dreht, an entsprechenden geneigten Kanten (6) eines entsprechenden Vorsprungs (20), der an der Nabe (1) bereitgestellt ist, derart zu gleiten, dass sie ein lineares Gleiten der Muffe (4) und eine daraus resultierende Bewegung der Stifte (7') in den entsprechenden Schlitzen (4') bewirken, sodass sie eine Drehung der Kurbelelemente (7) der Blätter (5) und gleichzeitig eine Drehung der Blätter (5) um deren Achse bewirken,
wobei die Umwandlungsvorrichtung außerdem ein vorgespanntes elastisches Element (9) bereitstellt, das dafür geeignet ist, das Zurückkehren der gleitenden Muffe (4) in die Segelstellung zu gewährleisten.

2. Propeller (100) nach Anspruch 1, wobei jeder Schlitz (4') der Muffe (4) ein im Wesentlichen krummliniges Profil aufweist oder ein geradliniges Profil aufweist, vorzugsweise ein geradliniges Profil.

3. Propeller (100) nach Anspruch 1 oder 2, wobei die Vorsprünge (20; 21) der jeweiligen Nabe (1) oder Muffe (4) zwei an der Zahl sind und diametral entgegengesetzt platziert sind, wobei die Vorsprünge (21) der Muffe (4) die gleiche Form und Größe wie die Vorsprünge (20) der Nabe (1) aufweisen.

4. Propeller (100) nach Anspruch 3, wobei jeder der Vorsprünge (20; 21) ein Profil mit einer im Wesentlichen spitz zulaufenden oder dreieckigen Form aufweist.

5. Propeller (100) nach einem der vorhergehenden Ansprüche, wobei die Muffe (4) ferner drei getrennte Längssitze (30) bereitstellt, die jeweils zur Aufnahme einer jeweiligen Schraube (12) geeignet sind, wobei jeder Sitz (30) am Konvergenzpunkt von jedem Paar von querverlaufenden Flächen (31) platziert ist.

6. Propeller (100) nach einem der vorhergehenden Ansprüche, wobei die Nabe (1) an dem zentralen Körper (10-11), auf einer Seite, mittels eines ersten Gewindeschraubrings (16), der auf einen mit Gewinde versehenen Endabschnitt der Nabe (1) aufgeschraubt werden kann, und auf der entgegengesetzten Seite mittels einer Gewindemutter (3) und Schrauben (17), die die Gewindemutter (3) an der Nabe (1) arretieren, fixiert ist.

7. Propeller (100) nach einem der vorhergehenden Ansprüche, wobei im Inneren des zentralen Körpers (10-11) außerdem ein zweiter mit Anschlagschraubring (8) bereitgestellt ist, der sich an dem hinteren Ende der Nabe (1) befindet und der in den hinteren Halbspitzbogen (11) des zentralen Körpers (10-11) hineingeschraubt werden kann, wobei er dafür geeignet ist, den Hub der Muffe (4) abhängig von dem gewählten betrieblichen Anstellwinkel zu beschränken, der in Grad auf einer fein abgestuften Krone angegeben ist, die um den Schraubring (8) herum angeordnet ist.

8. Propeller (100) nach Anspruch 7, wobei das elastische Kompressionselement (9) zwischen der Muffe (4) und dem zweiten Schraubring (8) angeordnet ist, um das Zurückkehren der Muffe (4) in die Position, in der sie an der Nabe (1) anliegt, zu bewirken, wenn die Drehung des Propellers (100) gestoppt wird, sodass sich die Blätter (5) von der Betriebsstellung in die Segelstellung drehen.

9. Propeller (100) nach einem der vorhergehenden Ansprüche, wobei das Kurbelelement (7) von Blatt (5) durch eine Gewindekupplung und einen elastischen Zapfen (32) an dem Kragen (40) des Blatts (5) festgehalten wird.

10. Propeller (100) nach einem der vorhergehenden Ansprüche, wobei jedes der Blätter (5) ein symmetrisches Profil aufweist.

## Revendications

1. Hélice (100) à pas de travail réglable automatiquement (autoréglable) pour passer d'une première position définie comme position de mise en drapeau à une deuxième position définie comme position de travail,
ladite hélice (100) comprenant un corps central (10-11) et une pluralité de pales rotatives (5) dépassant en saillie dudit corps central (10-11),
ledit corps central (10-11) renfermant intérieurement un moyeu (1) d'un arbre d'entraînement (2) qui est agencé coaxialement audit moyeu (1),
ledit corps central (10-11) renfermant en outre à l'intérieur un dispositif pour transformer le mouvement rotatif dudit moyeu (1) ou dudit arbre moteur (2) en le mouvement de rotation de ladite au moins une pale (5) autour de son axe par rapport audit corps central (10-11) de ladite hélice (100),
ledit dispositif de transformation étant couplé à au moins une desdites pales (5) et audit moyeu (1) ou audit arbre d'entraînement (2),
**caractérisé en ce que** ledit dispositif de transformation est un mécanisme cinématique de type « Scotch Yoke » et comprend
un manchon (4) monté coaxialement sur ledit moyeu (1) de manière coulissante longitudinalement, pourvu de surfaces (31) disposées transversalement à l'axe longitudinal du moyeu (1'), sur chacune desdites surfaces (31) une fente respective (4) étant formée, engagée par un axe respectif (7') d'un élément de manivelle (7) solidaire de la pale respective (5),
ledit manchon (4) étant en outre pourvu de protubérances en forme de canine (21) qui s'étendent parallèlement à l'axe longitudinal dudit moyeu (1) en tant que canines, chacune desdites protubérances (21) comportant deux bords inclinés (6'),
lesdits bords inclinés (6') de chaque saillie (21) dudit manchon (4) étant aptes à coulisser, lorsque ledit moyeu (1) tourne, sur des bords inclinés correspondants (6) d'une saillie correspondante (20) prévue sur ledit moyeu (1), de manière à générer un glissement linéaire dudit manchon (4) et un déplacement conséquent desdits axes (7') dans les fentes correspondantes (4') de manière à provoquer la rotation desdits éléments de manivelle (7) desdites lames (5) et simultanément la rotation desdites pales (5) autour de leur axe,
ledit dispositif de transformation comportant également un élément élastique pré-comprimé (9) apte à assurer le retour dudit manchon coulissant (4) dans la position amincie.

2. Hélice (100) selon la revendication 1, dans laquelle chaque fente (4') dudit manchon (4) a un profil sensiblement curviligne, ou a un profil rectiligne, de préférence rectiligne.

3. Hélice (100) selon la revendication 1 ou 2, dans laquelle lesdites protubérances (20 ; 21) du moyeu (1) ou manchon respectif (4) sont au nombre de deux et placées diamétralement opposées, lesdites protubérances (21) dudit manchon (4) ayant la même forme et la même taille que lesdites protubérances (20) dudit moyeu (1).

4. Hélice (100) selon la revendication 3, dans laquelle chacune desdites protubérances (20 ; 21) a un profil substantiellement en forme de canine ou triangulaire.

5. Hélice (100) selon une quelconque des revendications précédentes, dans laquelle ledit manchon (4) comporte en outre trois sièges longitudinaux distincts (30), aptes chacun à loger une vis respective (12), chaque siège (30) étant placé à la convergence de chaque paire de surfaces transversales (31).

6. Hélice (100) selon une quelconque des revendications précédentes, dans laquelle ledit moyeu (1) est fixé audit corps central (10-11) au moyen, d'un côté, d'une première bague filetée (16) pouvant être vissée sur un tronçon d'extrémité fileté dudit moyeu (1) et, de l'autre côté opposé, au moyen d'un écrou fileté (3) et de vis (17) qui bloquent ledit écrou fileté (3) sur le moyeu (1).

7. Hélice (100) selon une quelconque des revendications précédentes, dans laquelle à l'intérieur dudit corps central (10-11) il est également prévu une seconde bague de butée filetée (8) située à l'extrémité arrière du moyeu (1) et qui peut être vissée à l'intérieur de la demi-ogive arrière (11) du corps central (10-11), apte à limiter la course dudit manchon (4) en fonction du pas de travail choisi indiqué en degrés sur une couronne graduée disposée autour de ladite bague (8).

8. Hélice (100) selon la revendication 7, dans laquelle ledit élément de compression élastique (9) est interposé entre ledit manchon (4) et ladite deuxième bague (8) pour opérer le retour dudit manchon (4) en position de butée contre ledit moyeu (1) lorsque la rotation de ladite hélice (100) est arrêtée, de manière à faire tourner lesdites lames (5) de la position de travail à la position de mise en drapeau.

9. Hélice (100) selon une quelconque des revendications précédentes, dans laquelle ledit élément de manivelle (7) de pale (5) est retenu audit collier (40) de pale (5) par un accouplement fileté et une cheville élastique (32).

10. Hélice (100) selon une quelconque des revendications précédentes, dans laquelle chacune desdites pales (5) a un profil symétrique.
